# EUROPÄISCHE PATENTSCHRIFT

(11) **EP 0 700 637 B1**
(45) Veröffentlichungstag und Bekanntmachung des Hinweises auf die Patenterteilung: **30.05.2001**
(21) Anmeldenummer: 95113590.4
(22) Anmeldetag: 30.08.1995
(51) Int. Cl.: A22C 13/00

(54) **Mit Flüssigrauch imprägnierte schlauchförmige Nahrungsmittelhülle auf der Basis von Cellulosehydrat**
Tubular cellulose-hydrate-based food casing impregnated with liquid smoke
Enveloppe tubulaire pour aliments, imprégnée à la fumée liquide, à base d'hydrate de cellulose

(30) Priorität: 08.09.1994 DE 4431992
(43) Veröffentlichungstag der Anmeldung: 13.03.1996
(73) Patentinhaber: HOECHST AKTIENGESELLSCHAFT, 65926 Frankfurt am Main (DE)
(72) Erfinder: Hammer, Klaus-Dieter, Dr., D-55120 Mainz (DE); Mans, Leo, Dr., D-55120 Mainz (DE)
(74) Vertreter: Zounek, Nikolai, Dipl.-Ing.

(56) Entgegenhaltungen:
- EP-A- 0 315 965
- EP-A- 0 468 284
- EP-A- 0 559 084
- DE-A- 1 692 197
- GB-A- 2 020 157
- US-A- 4 834 993
- CHEMICAL ABSTRACTS, vol. 92, no. 17, April 1980 Columbus, Ohio, US; abstract no. 145276d, 'SMOKING AGENT-COATED SAUSAGE CASING' Seite 461; Spalte 2; & JP-A-54 147 970 (UCC) 19 November 1979

## Beschreibung

Die Erfindung betrifft eine schlauchförmige Nahrungsmittelhülle auf der Basis von Cellulosehydrat, deren Innenseite mit Flüssigrauch imprägniert ist. Sie ist besonders für Fleischprodukte, wie Wurst und Schinken, geeignet. Sie betrifft weiterhin ein Verfahren zur Herstellung dieser Nahrungsmittelhüllen.

Schlauchförmige Nahrungsmittelhüllen auf der Basis von Cellulosehydrat sind seit langem bekannt und werden gewöhnlich nach dem Viskoseverfahren hergestellt. Dabei wird eine allgemein als Viskoselösung bezeichnete alkalische Lösung von Cellulosexanthogenat durch eine ring- oder schlitzförmige Düse ausgepreßt, mit saurer Flüssigkeit als Cellulosehydrat-Gel koaguliert und zu Cellulosehydrat regeneriert. Das so hergestellte unverstärkte Cellulosehydrat-Material wird auch als Zellglas bezeichnet und ist unter dem Warenzeichen ^{(R)}Cellophan bekannt. Bei der Herstellung faserverstärkter Hüllen wird ein schlauch- oder bahnförmiger Faserstoff mit der Viskoselösung beaufschlagt und anschließend in entsprechender Weise mit Koagulations- und Regenerierflüssigkeit behandelt.

Nahrungsmittelhüllen müssen auch noch nach längeren Lagerzeiten geschmeidig und ausreichend dehnfähig sein. Diese Eigenschaften versuchte man durch Zusatz von sekundären Weichmachern, wie Glycerin, zu verbessern. Da diese Weichmacher nicht chemisch, sondern nur durch zwischenmolekulare Kräfte an das Cellulosehydrat gebunden sind, werden sie beim Wässern der Hülle oder beim Brühen oder Kochen der Wurst herausgelöst. Die Folge ist ein besonders starkes Verspröden der weichmacherfreien, getrockneten Cellulosehülle nach der Verarbeitung. Diese Erscheinung ist auf eine im Cellulosematerial vor sich gehende Kristallisation zurückzuführen. Dabei kommt es im Cellulosegefüge zur Ausbildung von Wasserstoffbrückenbindungen zwischen den einzelnen Cellulosemolekülen und damit zu einer Annäherung und räumlichen Fixierung. Durch diese Strukturveränderung wird die Hülle besonders stoßempfindlich und reißt sehr häufig beim ersten Anschneiden über die gesamte Länge ein. Gemäß der EP-A 0 460 348 zeigen glycerinfreie Wursthüllen, die mit einem Gemisch von Cellulose und Alginsäure und/oder Alginat hergestellt sind, demgegenüber deutlich verbesserte Eigenschaften.

Nahrungsmittelhüllen müssen den unterschiedlichsten Anforderungen Rechnung tragen. Sie dienen ebenso als Behälter während der Verarbeitung des Produkts wie als Schutzhülle für das Fertigprodukt. Entscheidend für den Verkauf sind jedoch Aussehen und Geschmack der Nahrungsmittel. Das gilt besonders für geräucherte Fleischwaren. Es besteht die Tendenz, das traditionelle Räuchern durch den Einsatz sogenannter "Flüssigrauchlösungen", die von der Nahrungsmittelindustrie entwickelt wurden, zu ersetzen. Diese Lösungen wurden bisher in die Fleisch- bzw. Wurstmasse eingearbeitet oder darauf gesprüht. Wegen der oft ungleichmäßigen Räucherfarbe auf der Oberfläche des Produktes und des mangelhaften Aromas wurde nach anderen Verfahren gesucht. So versuchte man, die Flüssigrauch-lösung auf die innere oder äußere Oberfläche der Nahrungsmittelhüllen aufzutragen und so zu erreichen, daß die gewünschte Räucherfarbe und das Aroma auf das Füllgut übertragen wird.

Gemäß der DE-A 10 99 326 setzt man Wursthüllen aus regenerierter Cellulose während oder nach dem Trocknungsprozeß der Einwirkung von Rauch aus, der durch mehr oder weniger vollständige Verbrennung von Holz erzeugt wurde. Der Rauch bewirkt eine Resistenz gegen die zerstörende Wirkung von Mikroorganismen. Die Einwirkungsdauer wird verkürzt, wenn der Celluloseschlauch mit den aus Holzrauch gewonnenen Kondensaten in konzentrierter oder verdünnter Form von außen imprägniert wird.

Flüssigrauch, wie man ihn durch Einleiten von Holzrauch in Wasser erhält, ist sauer und kann daher die Cellulosehydrat-Wursthülle schädigen. Ein solcher saurer Flüssigrauch mit einem Gesamtsäureanteil von mindestens 6 Gew.-%, vorzugsweise mindestens 9 Gew.-%, ist aus der US-A 4 377 187 oder EP-A-O 315 965, welches den Oberbegriff des Anspruches 1 darstellt, bekannt. Ein höherer Säureanteil bedeutet dabei einen höheren Anteil an teerartigen Bestandteilen. Mit diesem Flüssigrauch wird die innere oder die äußere Oberfläche der Cellulosehüllen imprägniert. Um eine Schädigung der Cellulose zu vermeiden, wird gemäß der US-A 4 834 993 die äußere Oberfläche von Wursthüllen auf Cellulosebasis mit einem neutralisierten Flüssigrauch behandelt, der einen pH-Wert von mehr als 4, vorzugsweise von 5 bis 9, hat. Um die Diffusion von hochmolekularen Bestandteilen durch die Wursthülle zu ermöglichen, kann der neutralisierte Flüssigrauch einen kurzkettigen Alkohol enthalten. Bei der Neutralisation des Flüssigrauchs fallen jedoch in der Regel feste Bestandteile aus. Um dies zu verhindern, wurden der wäßrigen Flüssigrauchlösung mindestens 10 Gew.-% eines wasserlöslichen Alkohols, wie Ethanol, Glycerin, Propylenglykol oder Triethylenglykol, zugesetzt (DE-A 28 13 796 = US-A 4 104 408). Die während des Neutralisierens ausfallenden teerartigen Bestandteile lösen sich wieder auf, wenn der pH-Wert der Flüssigrauchlösung auf mehr als 10 erhöht wird (US-A 4 446 167). Die alkalische Flüssigrauchlösung kann zusätzlich noch bis zu 10 Gew.-% an Glycerin und/oder Propylenglykol als Weichmacher für die Wursthülle enthalten. Um die Schälbarkeit der Hülle zu verbessern, kann die Flüssigrauchlösung noch 0,5 bis 2 Gew.-% an Carboxymethylcellulose, Alginat, Dextrin, Amylopectin oder anderen für diesen Zweck üblichen Substanzen enthalten (US-A 4 442 868). Diese Substanzen können auch vor der Behandlung mit Flüssigrauch auf die Hülle aufgebracht werden.

Die teerartigen Bestandteile lassen sich aus dem sauren Flüssigrauch durch Extraktion mit organischen Lösemitteln entfernen. Die farbgebenden Bestandteile des Rauches bleiben in der wäßrige Phase zurück. Vor der Weiterverwendung wird die wäßrige Phase durch Hinzufügen von alkalischen Neutralisationsmitteln auf einen pH-Wert von 6 bis 8 eingestellt. Das gleiche Resultat wird erreicht, wenn der saure Flüssigrauch neutralisiert und die dabei ausgefallenen teerartigen Bestandteile abgetrennt werden. Ein so hergestellter Flüssigrauch ist bei neutralem pH-Wert auch ohne Zusatz von Alkoholen oder anderen Additiven stabil (EP-A 0 095 616). Er besitzt allerdings nur noch wenig oder gar keinen Räuchergeschmack mehr, so daß das Aroma auf andere Weise auf das Füllgut übertragen werden muß.

Es ist demnach Aufgabe der Erfindung, eine Nahrungsmittelhülle auf Cellulosehydratbasis zur Verfügung zu stellen, die Räucherfarbe und -aroma gleichmäßig und intensiv auf das Nahrungsmittel übertragen kann.

Gelöst wird die Aufgabe durch eine Nahrungsmittelhülle auf der Basis von Cellulosehydrat, die auf ihrer Innenseite mit Flüssigrauch imprägniert ist, der einen pH-Wert von etwa 2 bis weniger als 4 aufWeist, dadurch gekennzeichnet, daß den Flussigranch zusätzlich eine viskositätserhöhende Verbindung sowie einen Emulgator enthält.

Die viskositätserhöhende Verbindung ist bevorzugt Chitosan (= N-deacetyliertes Chitin), Polyvinylpyrrolidon, ein Polysaccharid, ein Stärke- oder ein Cellulosederivat. Das "Derivat" ist im allgemeinen ein Ether oder Ester. Von den Polysacchariden sowie den Stärke- und Cellulosederivaten sind natürlich nur solche geeignet, die im sauren Medium nicht unlöslich werden. Zu den Polysacchariden sollen hier auch die Heteropolysaccharide gezählt werden; das sind Polysaccharide, die aus verschiedenartigen Monosaccharideinheiten aufgebaut sind. So ist Alginsäure zwar ein Heteropolysaccharid, hier jedoch nicht geeignet, da sie in dem sauren Flüssigrauch unlöslich ist und ausfallen würde. Aus den gleichen Gründen ist Methylcellulose geeignet, Carboxymethylcellulose dagegen nicht. Der Anteil der viskositäterhöhenden Verbindung beträgt etwa 0,5 bis 3 Gew.-%, bevorzugt 1,5 bis 2,5 Gew.-%, jeweils bezogen auf das Gewicht des Flüssigrauchs. Sie erhöht die Viskosität des Flüssigrauchs auf 10 bis 40 s (Fordbecher 4). Die Oberflächenspannung des Flüssigrauchs beträgt dabei bevorzugt 30 bis 40 mN/m.

Der Emulgator kann ionisch oder nicht-ionisch sein. Bevorzugte ionische Emulgatoren sind Alkyl- oder Alkylaryl-sulfonate oder -sulfate; bevorzugte nicht-ionische Emulgatoren sind ethoxylierte unverzweigte oder verzweigte (C₆-C₂₀)Alkanole sowie ethoxyliertes Sorbitanmonooleat. Der Anteil des Emulgators beträgt etwa 0,5 bis 15 Gew.-%, bevorzugt 1 bis 5 Gew.-%, jeweils bezogen auf das Gesamtgewicht des Flüssigrauchs.

Der zur Herstellung der erfindungsgemäßen Nahrungsmittelhüllen verwendete saure Flüssigrauch weist bevorzugt einen pH-Wert von 2,5 bis 3 auf. Er enthält alle Bestandteile des ursprünglichen Holzrauches, d.h. die teerartigen Bestandteile sind nicht abgetrennt. Der Gesamtsäureanteil (bestimmt wie in der US-A 4 377 187 beschrieben) in diesem Flüssigrauch beträgt 3 bis weniger als 6 Gew.-%. Weder Alkohole noch Chelatbildner oder Reduktionsmittel werden dem Flüssigrauch zugesetzt. Er bleibt praktisch so, wie man ihn durch Verbrennen oder Verschwelen von Holz und Einleiten des Rauchs in Wasser erhält, dem man lediglich das viskositätserhöhende Mittel und den Emulgator sowie gegebenfalls in geringen Mengen weitere, allgemein übliche Zusätze, insbesondere Farbstoffe, hinzufügt. Überraschenderweise übertragen die erfindungsgemäßen Nahrungsmittelhüllen Räuchergeschmack, -farbe und -geruch unverfälscht und wesentlich kräftiger auf das Füllgut als die bekannten, mit neutralisiertem Flüssigrauch imprägnierten Hüllen.

Die mit dem sauren Flüssigrauch zu imprägnierenden Nahrungsmittelhüllen auf Cellulosebasis enthalten zweckmäßig nicht mehr als 10 Gew.-% an Glycerin, bezogen auf das Gesamtgewicht der Hülle, denn Glycerin vermindert die Aufnahmefähigkeit für den Flüssigrauch und beeinträchtigt die Übertragung von Farbe und Aroma auf das von der Hülle umschlossene Nahrungsmittel. Ein besonders bevorzugtes Ausgangsmaterial zur Herstellung der erfindungsgemäßen Nahrungsmittelhüllen ist deshalb ein glycerinfreies, faserverstärktes Cellulose-Basismaterial, das Alginsäure oder Alginat enthält. Alginsäuren sind bekanntlich Carboxylgruppen enthaltende pflanzliche Polysaccharide. Alginate sind die Salze der Alginsäuren, vorzugsweise die Alkali-, Ammonium- und Erdalkalisalze. Natriumalginat wird gewöhnlich durch Extraktion von Braunalgen mit Hilfe von Sodalösung gewonnen. Alginate bzw. Alginsäuren bestehen aus 1,4-beta-glykosidisch verknüpften **D**-Mannuronsäureeinheiten mit Einschüben von 1,4-alpha-glykosidisch verknüpften **L**-Guluronsäureeinheiten. Sie sind ähnlich wie Cellulose aus langen unverzweigten Kettenmolekülen aufgebaut. Durch die große Anzahl von Carboxylgruppen sind die Alginate bzw. Alginsäuren außerordentlich hydrophil und in der Lage, das 200- bis 300fache ihres Gewichts an Wasser zu binden. Das Basismaterial ist bevorzugt faserverstärkt, besonders bevorzugt mit Hanffasern.

Die erfindungsgemäße Nahrungsmittelhülle überträgt nicht nur Farbe und Aroma stärker und gleichmäßiger als die bisher bekannten; sie läßt sich überdies auch noch leicht vom Füllgut abschälen, insbesondere von Kochschinken und Brühwurst.

Die Aufnahme und vor allem die Übertragung der öllöslichen, färbenden Bestandteile läßt sich noch verbessern, wenn dem Flüssigrauch ein natürliches oder synthetisches Triglycerid zugesetzt ist. Günstig sind Olivenöl, Sonnenblumenöl sowie synthetische Triester aus Glycerin und (C₈-C₁₀)Fettsäuren (z.B. ^{(R)}Softenol 3108 von Dynamit Nobel). Besonders bevorzugt ist jedoch Lecithin. Es zieht auf die Cellulose auf und bewirkt gleichzeitig einen guten Trenneffekt. Der Anteil des Triglycerids beträgt etwa 2 bis 30 Gew.-%, bevorzugt 5 bis 15 Gew.-%, jeweils bezogen auf das Gesamtgewicht des Flüssigrauchs.

Die erfindungsgemäßen, mit Flüssigrauch imprägnierten Nahrungsmittelhüllen werden ohne vorheriges Wässern gestopft. Da sie einen relativ hohen Feuchtegehalt haben, ist eine fungizide Außenbeschichtung, wie sie beispielsweise in der EP-A 0 378 069 (= US-A 5 262 211) beschrieben ist, vorteilhaft.

Die Herstellung der erfindungsgemäßen Nahrungsmittelhülle erfolgt zweckmäßig, indem man den CellulosehydratSchlauch mit einem Wasseranteil von 8 bis 12 Gew.-%, bezogen auf das Gewicht der trockenen Cellulose, zunächst in einer Tränkwanne mit Wasser befeuchtet. Dann wird die Innenseite des Schlauchs mit der oben beschriebenen Flüssigrauchlösung imprägniert. Nach dem Passieren einer Quetschwalze wird der Schlauch - aufgeblasen oder flach - bis zu einer Endfeuchte von 25 bis 35 Gew.-%, bezogen auf das Gewicht der trockenen Cellulose, getrocknet. Danach kann er gerafft oder in Abschnitten einseitig abgebunden werden. Dieses Herstellungsverfahren läßt sich mit den üblichen apparativen Vorrichtungen durchführen.

Die erfindungsgemäße Nahrungsmittelhülle kann gegebenenfalls übliche Zusatzstoffe, wie Farbpigmente, z. B. Ruß oder TiO₂, enthalten.

Die erfindungsgemäßen Nahrungsmittelhüllen sind pro Quadratmeter im allgemeinen mit 20 bis 100 g, bevorzugt mit 30 bis 80 g, des genannten Flüssigrauchs imprägniert. Bei der Verwendung für Kochschinken werden allgemein 60 bis 80 g Flüssigrauch pro Quadratmeter eingesetzt, und es wird der Zusatz eines vorzugsweise braunen Lebensmittelfarbstoffs empfohlen. Der Geschmack läßt sich gegebenenfalls durch den Zusatz eines Geschmacksveredlers auf Glutamatbasis, wie ^{(R)}Supraglut, ^{(R)}Smak, ^{(R)}Smak 'S' oder ^{(R)}Mat noch weiter verbessern. Der Geschmacksveredler hat allgemein einen Anteil von 0,1 bis 0,6 Gew.-%, bevorzugt 0,2 bis 0,4 Gew.-%, jeweils bezogen auf das Gesamtgewicht des Flüssigrauchs. Nahrungsmittelhüllen für Bologni (fleischwurstähnliche Brühwurst), werden vorteilhaft mit einem 1:1 mit Wasser verdünnten Flüssigrauch imprägniert. Hier beträgt die Auftragsmenge etwa 30 bis 40 g/m².

### Beispiel

Es wurden die Flüssigrauchlösungen A, B und C bereitet:

### Lösung A

- 250 ml: Flüssigrauch (^{(R)}Hickory Supreme der Red Arrow Products Co., Manitowoc, Wis., USA),
- 600 ml: einer 0,1 gew.-%igen wäßrigen Lösung eines Heteropolysaccharids (^{(R)}Rhodigel 23),
- 75 ml: Lecithin,
- 50 ml: Polyoxyethylen(20)-sorbitan-monooleat (^{(R)}Tween 80),
- 25 ml: ethoxyliertes Isotridecanol (durchschnittlich 8 Ethylenoxid-Einheiten, ^{(R)}Genapol X 080);

Diese Lösung hatte einen pH-Wert von 2,7, eine Viskosität von 15,6 s und eine Oberflächenspannung von 32,9 mN/m.

### Lösung B

- 20 l: Flüssigrauch (^{(R)}Charsol Supreme Hickory der Red Arrow Products Co.,
- 24 l: einer 0,2 gew.-%igen wäßrigen Lösung eines Heteropolysaccharids (^{(R)}Rhodigel 23),
- 24 l: einer 0,66 gew.-%igen wäßrigen Lösung von Schokobraun Nr. 67775,
- 6 l: Lecithin,
- 4 l: (R)Tween 80,
- 2 l: ^{(R)}Genapol X 080;

### Lösung C

ist identisch mit Lösung A, enthält jedoch zusätzlich 2 g (0,2 Gew.-%) Farbstoff 78 470 (zugelassen durch die U.S. Food and Drug Administration).

Mit den Lösungen A und C wurde im Labormaßstab imprägniert, mit der Lösung B dagegen in größerem Maßstab.

Den Flüssigrauchlösungen wurden zudem noch wenige Tropfen eines Entschäumers zugesetzt.

Mit diesen Flüssigrauchlösungen wurden Cellulose-Faser-darm glänzend (FDN) rauchfarbig, Kal. 120, der 10 Gew.-% Glycerin und 5 Gew.-% Alginat enthielt, jeweils bezogen auf das Gewicht der trockenen Cellulose, und außen mit einer 1 gew.-%igen wäßrigen Didecyl-dimethyl-ammoniumsorbat-Lösung fungicid behandelt war, imprägniert.

Die so erhaltene Hülle wurde ohne zusätzliche Wässerung mit Kochschinken gefüllt und gegart. Muster davon wurden dann von 4 Personen in einem Blindtest hinsichtlich Farbtiefe, Geruch und Geschmack beurteilt.

Zum Vergleich wurden in dem Test auch Muster beurteilt, die unter Verwendung der oben genannten Faserdarm-Hülle, jedoch ohne Rauchimprägnierung, hergestellt wurden. Daneben wurden auch Muster herangezogen, die unter Verwendung einer Cellulosehydrat-Wursthülle hergestellt waren, die mit einer alkalischen Flüssigrauch-Lösung imprägniert war. Diese Lösung enthielt ebenfalls noch die Teerbestandteile.

In gleicher Weise wurde auch ein glycerinfreier Cellulose-Faserdarm mit dem oben genannten Flüssigrauchlösungen A bis C imprägniert, mit Kochschinken gefüllt und gegart. Dieser glycerinfreie Faserdarm war wie folgt hergestellt worden:

Ein 17 g-Hanffaserpapier wurde zu einem Schlauch vom Kaliber 58 geformt und außen mit einem Gemisch aus 111 l/h Viskose und 11 l/h einer 4 gew.-%igen wäßrigen Alginatlösung (^{(R)}Protacell 20 von Protan) beschichtet. Der Schlauch passierte dann die üblichen Spinn-, Fäll- und Waschkufen. Er wurde anschließend mit Luft aufgeblasen und auf einen Feuchtegehalt von 14 bis 16 Gew.-% getrocknet. Der Anteil an Alginat bezogen auf das Gewicht des Cellulosehydrats betrug 5 Gew.-%. Der Quellwert lag bei 110 %, der Platzdruck (nach dem Wässern) bei 82 kPa (Sollwert: 76 kPa) und die statische Dehnung bei 61,3 mm bei 21 kPa (Toleranzbereich: 59,7 bis 62,7 mm).

Es zeigte sich, daß die erfindungsgemäßen Nahrungsmittelhüllen Produkte mit besserem Geschmack und besserem Aroma sowie gleichmäßigerer Farbe ergaben und von den Testpersonen im Blindtest vorgezogen wurden.

## Patentansprüche

1. Nahrungsmittelhülle auf der Basis von Cellulosehydrat, die auf ihrer Innenseite mit Flüssigrauch imprägniert ist, der einen pH-Wert von etwa 2 bis weniger als 4 aufweist dadurch gekennzeichnet, daß der Flüssigrauch zusätzlich eine viskositätserhöhende Verbindung sowie einen Emulgator enthält.

2. Nahrungsmittelhülle gemäß Anspruch 1, dadurch gekennzeichnet, daß die viskositätserhöhende Verbindung Chitosan, ein Polysaccharid, ein Stärke- oder ein Cellulosederivat ist.

3. Nahrungsmittelhülle gemäß Anspruch 1 oder 2, dadurch gekennzeichnet, daß der Anteil der viskositätserhöhenden Verbindung 0,5 bis 3 Gew.-%, bevorzugt 1,5 bis 2,5 Gew.-%, jeweils bezogen auf das Gewicht des Flüssigrauchs, beträgt.

4. Nahrungsmittelhülle gemäß Anspruch 1 oder 2, dadurch gekennzeichnet, daß der Emulgator ein ionischer Emulgator, bevorzugt ein Alkyl- oder Alkylaryl-sulfonat oder -sulfat ist.

5. Nahrungsmittelhülle gemäß Anspruch 1 oder 2, dadurch gekennzeichnet, daß der Emulgator ein nichtionischer Emulgator ist, bevorzugt ein ethoxyliertes unverzweigtes oder verzweigtes (C₆-C₂₀)Alkanol.

6. Nahrungsmittelhülle gemäß einem oder mehreren der Ansprüche 1 bis 4, dadurch gekennzeichnet, daß der Anteil des Emulgators 0,5 bis 15 Gew.-%, bevorzugt 1 bis 5 Gew.-%, jeweils bezogen auf das Gesamtgewicht des Flüssigrauchs, beträgt.

7. Nahrungsmittelhülle gemäß einem oder mehreren der Ansprüche 1 bis 6, dadurch gekennzeichnet, daß der Flüssigrauch ein natürliches oder synthetisches Triglycerid enthält.

8. Nahrungsmittelhülle gemäß Anspruch 7, dadurch gekennzeichnet, daß das Triglycerid Olivenöl, Sonnenblumenöl, ein synthetischer Triester aus Glycerin und (C₈-C₁₀)Fettsäuren oder Lecithin ist.

9. Nahrungsmittelhülle gemäß Anspruch 7 oder 8, dadurch gekennzeichnet, daß der Anteil des Triglycerids 2 bis 30 Gew.-%, bevorzugt 5 bis 15 Gew.-%, jeweils bezogen auf das Gesamtgewicht des Flüssigrauchs, beträgt.

10. Nahrungsmittelhülle gemäß einem oder mehreren der Ansprüche 1 bis 9, dadurch gekennzeichnet, daß der Flüssigrauch einen pH-Wert von 2,5 bis 3 hat.

11. Nahrungsmittelhülle gemäß Anspruch 1 oder 2, dadurch gekennzeichnet, daß das Cellulose-Basismaterial glycerinfrei ist und Alginsäure oder Alginat enthält.

12. Verfahren zur Herstellung einer mit Flüssigrauch imprägnierten Nahrungsmittelhülle auf Basis von Cellulosehydrat, dadurch gekennzeichnet, daß ein Cellulosehydratschlauch mit einem Wassergehalt von 8 bis 12 Gew.-% mit Wasser befeuchtet, dann auf der Innenseite mit dem im Anspruch 1 genannten Flüssigrauch imprägniert und schließlich bis zu einem Wassergehalt von 25 bis 35 Gew.-% getrocknet wird.

13. Verwendung der Nahrungsmittelhülle gemäß einem oder mehreren der Ansprüche 1 bis 11 für Kochschinken oder Brühwurst.

## Claims

1. A cellulose-hydrate-based food casing which is impregnated on its inside with a liquid smoke having a pH of about 2 to less than 4, wherein the liquid smoke additionally contains a viscosity-increasing compound and an emulsifier.

2. The food casing as claimed in claim 1, wherein the viscosity-increasing compound is chitosan, a polysaccharide, a starch derivative or a cellulose derivative.

3. The food casing as claimed in claim 1 or 2, wherein the content of the viscosity-increasing compound is 0.5 to 3% by weight, preferably 1.5 to 2.5% by weight, in each case based on the weight of the liquid smoke.

4. The food casing as claimed in claim 1 or 2, wherein the emulsifier is an ionic emulsifier, preferably an alkyl- or alkylarylsulfonate or an alkyl or alkylaryl sulfate.

5. The food casing as claimed in claim 1 or 2, wherein the emulsifier is a nonionic emulsifier, preferably an ethoxylated unbranched or branched (C₆-C₂₀)alkanol.

6. The food casing as claimed in one or more of claims 1 to 4, wherein the content of the emulsifier is 0.5 to 15% by weight, preferably 1 to 5% by weight, in each case based on the total weight of the liquid smoke.

7. The food casing as claimed in one or more of claims 1 to 6, wherein the liquid smoke contains a natural or synthetic triglyceride.

8. The food casing as claimed in claim 7, wherein the triglyceride is olive oil, sunflower oil, a synthetic triester of glycerol and (C₈-C₁₀) fatty acids, or lecithin.

9. The food casing as claimed in claim 7 or 8, wherein the content of the triglyceride is 2 to 30% by weight, preferably 5 to 15% by weight, in each case based on the total weight of the liquid smoke.

10. The food casing as claimed in one or more of claims 1 to 9, wherein the liquid smoke has a pH of 2.5 to 3.

11. The food casing as claimed in claim 1 or 2, wherein the cellulose base material is glycerol-free and contains alginic acid or alginate.

12. A process for producing a cellulose-hydrate-based food casing impregnated with liquid smoke, which comprises moistening with water a cellulose hydrate tube having a water content of 8 to 12% by weight, then impregnating it on the inside using the liquid smoke mentioned in claim 1 and finally drying it to a water content of 25 to 35% by weight.

13. The use of the food casing as claimed in one or more of claims 1 to 11 for cooked ham or scalded sausage.

## Revendications

1. Enveloppe alimentaire à base d'hydrate de cellulose imprégnée du côté interne par une fumée liquide qui présente une valeur de pH d'environ 2 jusqu'à moins de 4, caractérisée en ce que la fumée liquide contient en outre un composé capable d'accroître la viscosité ainsi qu'un agent émulsionnant.

2. Enveloppe alimentaire selon la revendication 1, caractérisée en ce que le composé capable d'accroître la viscosité est un chitosane, un polysaccharide, un dérivé de l'amidon ou un dérivé de la cellulose.

3. Enveloppe alimentaire selon la revendication 1 ou la revendication 2, caractérisée en ce que la proportion du composé capable d'accroître la viscosité varie de 0,5 à 3% en poids, de préférence de 1,5 à 2,5% en poids, les pourcentages en poids étant calculés par rapport au poids de la fumée liquide.

4. Enveloppe alimentaire selon la revendication 1 ou la revendication 2, caractérisée en ce que l'agent émulsionnant est un agent émulsionnant ionique, de préférence un alkyle- ou alkylaryle-sulfonate ou bien un alkyle-ou alkylaryle-sulfate.

5. Enveloppe alimentaire selon la revendication 1 ou la revendication 2, caractérisée en ce que l'agent émulsionnant est un agent émulsionnant non ionique, de préférence un alcanol en C₆-C₂₀ éthoxylé ramifié ou linéaire.

6. Enveloppe alimentaire selon l'une ou plusieurs des revendications 1 à 4, caractérisée en ce que la proportion de l'agent émulsionnant varie de 0,5 à 15% en poids, de préférence de 1 à 5% en poids, les pourcentages en poids étant calculés par rapport au poids total de la fumée liquide.

7. Enveloppe alimentaire selon l'une ou plusieurs des revendications 1 à 6, caractérisée en ce que la fumée liquide contient un triglycéride naturel ou synthétique.

8. Enveloppe alimentaire selon la revendication 7, caractérisée en ce que le triglycéride est l'huile d'olive, l'huile de tournesol, un triester synthétique dérivé du glycérol et d'acides gras en C₈-C₁₀ ou une lécithine.

9. Enveloppe alimentaire selon la revendication 7 ou la revendication 8, caractérisée en ce que la proportion de triglycéride varie entre 2 et 30% en poids, de préférence entre 5 et 15% en poids, les pourcentages en poids étant calculés par rapport au poids total de la fumée liquide.

10. Enveloppe alimentaire selon l'une ou plusieurs des revendications 1 à 9, caractérisée en ce que la fumée liquide présente un pH compris entre 2,5 et 3.

11. Enveloppe alimentaire selon la revendication 1 ou la revendication 2, caractérisée en ce que le matériau de base cellulosique est exempt de glycérol et contient de l'acide alginique ou un alginate.

12. Procédé pour la préparation d'une enveloppe alimentaire imprégnée par une fumée liquide et à base d'hydrate de cellulose, caractérisé en ce que l'on humidifie avec de l'eau un boyau d'hydrate de cellulose d'une teneur en eau comprise entre 8 et 12% en poids, qu'on imprègne ensuite le côté interne avec la fumée liquide mentionnée à la revendication 1 et en ce que l'on sèche enfin l'ensemble jusqu'à obtenir une teneur en eau comprise entre 25 et 35% en poids.

13. Utilisation de l'enveloppe alimentaire selon l'une quelconque des revendications 1 à 11 pour jambon cuit ou saucisse cuite et légèrement fumée.
